(19) Europäisches Patentamt
European Patent Office
Office européen des brevets

(11) **EP 1 518 289 B1**

(12) **EUROPEAN PATENT SPECIFICATION**

(45) Date of publication and mention
of the grant of the patent:
**03.09.2008 Bulletin 2008/36**

(51) Int Cl.:
**H01M 8/10** (2006.01)

(21) Application number: **03740308.6**

(22) Date of filing: **23.06.2003**

(86) International application number:
**PCT/EP2003/006580**

(87) International publication number:
**WO 2004/004053 (08.01.2004 Gazette 2004/02)**

(54) **FUEL CELL INCORPORATING A POLYMER ELECTROLYTE MEMBRANE GRAFTED BY IRRADIATION**

BRENNSTOFFZELLE MIT DURCH STRAHLUNG GEPFROPFTER POLYMER-ELEKTROLYT-MEMBRAN

PILE A COMBUSTIBLE COMPRENANT UNE MEMBRANE ELECTROLYTE POLYMERE GREFFEE PAR IRRADIATION

(84) Designated Contracting States:
**AT BE BG CH CY CZ DE DK EE ES FI FR GB GR HU IE IT LI LU MC NL PT RO SE SI SK TR**

(30) Priority: **28.06.2002 PCT/EP02/07166**

(43) Date of publication of application:
**30.03.2005 Bulletin 2005/13**

(73) Proprietor: **Pirelli & C. S.p.A.**
**20123 Milano (IT)**

(72) Inventors:
• **DUBITSKY, Yuri, A.**
**I-20159 Milano (IT)**
• **LOPES CORREIA TAVARES, Ana, Berta**
**c/o INRS-Énergie**
**Varennes (Québec) J3X 1S2 (CA)**
• **ZAOPO, Antonio**
**I-20137 Milano (IT)**
• **ALBIZZATI, Enrico**
**I-28040 Lesa (IT)**

(74) Representative: **Giannesi, Pier Giovanni**
**Pirelli Pneumatici S.p.A.,**
**Viale Sarca, 222**
**20126 Milan (IT)**

(56) References cited:
**US-A- 4 287 032**      **US-A- 5 679 482**
**US-B1- 6 242 123**      **US-B1- 6 268 430**

**Description**

The present invention relates to a fuel cell.

More particularly, the present invention relates to a fuel cell incorporating a polymer electrolyte membrane grafted by irradiation, to a process for producing said polymer electrolyte membrane and to a polymer electrolyte membrane used therein.

The present invention moreover relates to an apparatus powered by said fuel cell.

Fuel cells are highly efficient electrochemical energy conversion devices that directly convert the chemical energy derived from renewable fuel into electrical energy.

Significant research and development activities have been focused on the development of proton-exchange membrane fuel cells. Proton-exchange membrane fuel cells have a polymer electrolyte membrane disposed between a positive electrode (cathode) and a negative electrode (anode). The polymer electrolyte membrane is composed of an ion-exchange polymer. Its role is to provide a means for ionic transport and for separation of the anode compartment and the cathode compartment.

More in particular, the traditional proton-exchange membrane fuel cells have a polymer electrolyte membrane placed between two gas diffusion electrodes, an anode and a cathode respectively, each usually containing a metal catalyst supported by an electrically conductive material. The gas diffusion electrodes are exposed to the respective reactant gases, the reductant gas and the oxidant gas. An electrochemical reaction occurs at each of the two junctions (three phases boundaries) where one of the electrodes, electrolyte polymer membrane and reactant gas interface.

In the case of hydrogen fuel cells, the electrochemical reactions occuring during fuel cell operation at both electrodes (anode and cathode) are the following:

Anode: $H_2 \rightarrow 2H^+ + 2e^-$;
Cathode: $\frac{1}{2}O_2 + 2H^+ + 2e^- \rightarrow H_2O$;
Overall: $H_2 + \frac{1}{2}O_2 \rightarrow H_2O$.

During fuel cell operations, hydrogen permeates through the anode and interact with the metal catalyst, producing electrons and protons. The electrons are conducted via an electrically conductive material through an external circuit to the cathode, while the protons are simultaneously transferred via an ionic route through a polymer electrolyte membrane to the cathode. Oxygen permeates to the catalyst sites of the cathode where it gains electrons and reacts with proton to form water. Consequently, the products of the proton-exchange membrane fuel cells reactions are water, electricity and heat. In the proton-exchange membrane fuel cells, current is conducted simultaneously through ionic and electronic route. Efficiency of said proton-exchange membrane fuel cells is largely dependent on their ability to minimize both ionic and electronic resistivity.

Polymer electrolyte membranes play an important role in proton-exchange membrane fuel cells. In proton-exchange membrane fuel cells, the polymer electrolyte membrane mainly has two functions: (1) it acts as the electrolyte that provides ionic communication between the anode and the cathode; and (2) it serves as a separator for the two reactant gases (e.g., $O_2$ and $H_2$). In other words, the polymer electrolyte membrane, while being useful as a good proton transfer membrane, must also have low permeability for the reactant gases to avoid cross-over phenomena that reduce performance of the fuel cell. This is especially important in fuel cell applications in which the reactant gases are under pressure and the fuel cell is operated at elevated temperatures. If electrons pass through the membrane, the fuel cell is fully or partially shorted out and the produced power is reduced or even annulled.

Fuel cell reactants are classified as oxidants and reductants on the basis of their electron acceptor or electron donor characteristics. Oxidants include pure oxygen, oxygen-containing gases (e.g., air) and halogens (e.g., chlorine) and hydrogen peroxide. Reductants include hydrogen, carbon monoxide, natural gas, methane, ethane, formaldheyde, ethanol, ethyl ether, methanol, ammonia and hydrazine.

Polymer electrolyte membranes are generally based on polymer electrolytes which have negatively charged groups attached to the polymer backbone. These polymer electrolytes tend to be rather rigid and are poor proton conductors unless water is adsorbed. The proton conductivity of hydrated polymer electrolyte dramatically increases with water content.

Therefore, the proton-exchange membrane fuel cells generally require humidified gases, e.g. hydrogen and oxygen (or air), for their operations.

Among the different types of fuel cells under development, the direct methanol fuel cell (DMFC) using polymer electrolyte membranes are promising candidates for the application in portable electronic devices and in transportation (e.g. electrical vehicles).

In a direct methanol fuel cells, methanol is oxidized to carbon dioxide at the anode and oxygen is reduced at the cathode according to the following reaction scheme:

Anode: $CH_3OH + H_2O \rightarrow CO_2 + 6H^+ + 6e^-$;
Cathode: $3/2O_2 + 6H^+ + 6e^- \rightarrow 3H_2O$;
Overall: $CH_3OH + 3/2O_2 \rightarrow CO_2 + 2H_2O$.

The protons are simultaneously transferred through the polymer electrolyte membrane from the anode to the cathode.

One of the major problems correlated to the use of direct methanol fuel cells is the permeation of methanol from the anode to the cathode through the membrane, a phenomenon usually known as methanol cross-over. Said methanol cross-over causes both depolarization losses at the cathode and conversion losses in terms of lost fuel. In order to improve the performance of the direct methanol fuel cell, it is necessary to eliminate or at least to reduce said methanol cross-over. Consequently, the development of polymer electrolyte membranes which have very low permeability to methanol is desired.

Different types of polymer electrolyte membranes such as, for example, polyphenolsulfonic acid membranes, polystyrene sulfonate membranes, polytrifluorostyrene membranes, have been used. At present, perfluorinated membranes are the most commonly used.

Conventional perfluorinated membranes have a non-crosslinked perfluoroalkylene polymer main chain which contain proton-conductive functionals groups. When such membranes are ionized, the main chain is highly hydrophobic, whereas the proton-conductive side chains are highly hydrophylic. Nafion® membranes, made by DuPont, are a typical example of the above mentioned membranes.

However, use of Nafion® membranes is associated with some drawbacks such as, for example, the fuel cross-over. Cross-over problems with Nafion® membranes are especially troublesome in direct methanol fuel cell applications, where excessive methanol transport, which reduces efficiency and power density, occurs. Methanol cross-over not only lowers the fuel utilization efficiency but also adversely affects the oxygen cathode performance, significantly lowering fuel cell performance. Moreover, the Nafion® membranes are very difficult and very expensive to be manufactured.

Various attempts have been made to provide polymer electrolyte membranes which have comparable or improved properties with respect to Nafion® membranes and which are also much less expensive to be manufactured.

For example, International Patent Application WO 98/22989 discloses a polymer electrolyte membrane composed of polystyrene sulfonic acid (PSSA) and poly(vinylidene fluoride) (PVDF). Said membrane may be prepared, for example, starting from the preparation of a PVDF membrane which could serve as an inert polymer matrix which is subsequently impregnated with polystyrene divinyl benzene mixtures (PS/DVB mixtures) to produce interpenetrating polymer networks; then, the membrane so obtained is sulfonated. Instead of PVDF, other materials may be used as the inert polymer matrices such as, for example, polytetrafluoroethylene-N-vinylpyrrolidone, polytetrafluoroethylene, polyvinyl-alchol-polyacrylonitrile, polyvinyl chloride, polyvinyl alcohol, polyacrylamide, polyethylene oxide, polypropylene, polyethylene, polysulfone, sulfonated polysulfone, polyethersulfone, polyetherimide, polymethylsulfoxide, polyacrylonitrile, glass membrane composites (hollow fibers), ceramic matrix host composites, zeolite matrix hosts. Said membrane is said to be particularly useful in low-temperature direct methanol fuel cell and it is said to enhance the efficiency and the electrical performances of the fuel cell by decreasing methanol cross-over.

Patent Application US 2001/0026893 discloses a grafted polymer electrolyte membrane prepared by first preparing a precursor membrane comprising a polymer which is capable of being graft polymerized, exposing the surface of said precursor membrane to a plasma in an oxidative atmosphere, graft-polymerizing a side chain polymer to said plasma treated precursor membrane and finally introducing a proton conductive functional group to the side chain. The precursor membrane may be formed from any polymer or copolymer such as, for example, polyethylene, polypropylene, polyvinylchloride, polyvinylidenedichloride, polyvinylfluoride (PVF), polyvinilydenedifluoride (PVDF), polytetrafluoroethylene, ethylene-tetrafluoroethylene copolymer, tetrafluoro-ethylene-perfluoroalkylvinylether copolymer, tetra-fluoroethylene-hexafluoropropylene copolymer. The side chain polymer may be any hydrocarbon polymer which contains a proton conductive functional group or which may be modified to provide a proton conductive functional group. The side chain polymer may be, for example, poly(chloroalkylstyrene), poly($\alpha$-methylstyrene), poly($\alpha$-fluorostyrene), poly(p-chloromethylstyrene), polystyrene, poly(meth)acrylic acid, poly(vinylalkylsulfonic acid), and mixtures thereof. Sulfonic acid groups are preferred as the proton conductive functional groups. The resulting grafted polymer electrolyte membrane, is said to have excellent stability and performance when used in a proton-exchange membrane fuel cell or for electrolysis of water.

Patent US 5,994,426 relates to a solid polymer electrolyte membrane which is formed of a synthetic resin which comprises (a) a main copolymer chain of a fluorocarbon-based vinyl monomer and a hydrocarbon-based vinyl monomer; and (b) a hydrocarbon-based side chain including a sulfonic group. Also disclosed is a process for producing said membrane which comprises the following steps: (a) irradiating a film-shaped copolymer made from a fluorocarbon-based vinyl monomer and a hydrocarbon-based vinyl monomer, and thereafter contacting a polymerizable alkenyl benzene with the irradiated copolymer, thereby forming a graft side chain resulting from the polymerizable alkenyl benzene; and (b) introducing a sulfonic group into the resulting graft side chain. Moreover, a modified version of said process is disclosed which comprises irradiating a film-shaped copolymer made from a fluorocarbon-based vinyl monomer and a hydrocarbon-based vinyl monomer, and thereafter contacting a polymerizable alkenyl benzene with the irradiated copolymer, thereby forming a graft side chain resulting from the polymerizable alkenyl benzene having a sulfonic group with the irradiated copolymer, thereby forming a graft side chain resulting from the polymerizable alkenyl benzene having a sulfonic group. Said membrane is said to have a high tensile strenght and flexibility and it is said to be useful in polymer electrolyte fuel cell.

International Patent Application WO 00/15679 discloses a process for the preparation of a monomer-grafted cross-linked polymer comprising the steps of: (i) activating the polymer by irradiation; (ii) quenching the activated polymer so as to effect crosslinking therein; (iii) activating the cross-linked polymer by irradiation; (iv) contacting the activated cross-linked polymer with an emulsion which comprises: (a) an unsaturated monomer; (b) an emulsifier and (c) water; for a time sufficient to effect the desired extent of grafting. Said process may be used to graft unsaturated monomers to a large number of polymers, copolymers or terpolymers formed from hydrocarbon, halogenated or perhalogenated (in particular, fluorinated or perfluorinated) monomers. Fluorinated or perfluorinated polymers, copolymers or terpolymers, are particularly preferred. Unsaturated monomers which may be used are selected from: styrene, trifluorostyrene, $\alpha$-methylstyrene, $\alpha,\beta$-dimethylstyrene, $\alpha,\beta,\beta$-trimethylstyrene, ortho-methylstyrene, metha-methylstyrene, para-methylstyrene, divinylbenzene, triallylcyanurate, (meth)acrylic acid, vinylpyrrolidone, vinylpyridine, vinylacetate, trifluorovinylacetate, methyltoluene, and mixtures thereof. Said process may additionally comprises the step of sulfonating the monomer-grafted polymer. Said monomer-grafted cross-linked polymer is said to be useful in the production of non-ionic echange membranes or ion-selective exchange membranes which can be used in various applications such as, for example, electrodialysis, dialysis, Donnan dialysis, redox cells and fuel cells.

According to the Applicant, one of the major problem encountered in fuel cells regards the performances of said fuel cells at low temperatures, e.g. at a temperatures range comprised between 20°C and 90°C. Generally, the fuel cell performances, as disclosed also in the prior art above reported, are enhanced by operating the same at higher temperatures: consequently, also the fuell cells which are said to operate at low temperatures, reach their maximum performances at high temperatures. Therefore, it would be advantageous to provide fuel cells which actually show high performances already at room temperature, e.g at about 20°C-25°C and which retain said high performances in the whole temperatures range above reported. In addition, in the case of direct methanol fuel cells, it is also important to minimize the methanol cross-over.

The Applicant has now found that it is possible to overcome the above mentioned problem utilizing a polymer electrolyte membrane comprising at least one polyolefin grafted by irradiation with side chains containing proton conductive functional groups, said side chains being present in a controlled amount and having a controlled length. More in particular, the Applicant has found that if the grafting irradiation process is carried out by operating at suitable conditions as reported hereinbelow, in particular at a predetermined radiation rate and for a predetermined time, it is possible to control both the amount and the length of said side chains. Said polymer electrolyte membrane is particularly useful in fuel cells operating at low temperatures, in particular at a temperatures range of from 20°C to 90°C. Said fuel cells show low cell resistance already at 20°C and retain said high performances in the whole temperatures range. Moreover, in the case of direct methanol fuel cells, said polymer electrolyte membrane shows a low methanol crossover.

According to a first aspect, the present invention thus relates to a fuel cell comprising:

(a) an anode;
(b) a cathode;
(c) a polymer electrolyte membrane placed between the anode and the cathode which comprises at least one polyolefin grafted with side chains containing proton conductive functional groups;

wherein said fuel cell has:

- a value of cell resistance at 90°C not higher than 0.30 $\Omega$ cm$^2$, preferably comprised between 0.02 $\Omega$ cm$^2$ and 0.25 $\Omega$ cm$^2$, more preferably comprised between 0.05 $\Omega$ cm$^2$ and 0.20 $\Omega$ cm$^2$;
- a value of cell resistance at 20°C differing from the value of cell resistance at 90°C of an amount not higher than 90%, preferably not higher than 70%, more preferably not higher than 50%, with respect to the value of cell resistance at 90°C.

According to one preferred embodiment, said side chains are grafted to the polyolefin through an oxygen bridge.

According to one preferred embodiment, the amount of grafting [$\Delta$p (%)] of said side chains is comprised between 10% and 250%, preferably between 40% and 230%.

The amount of grafting [$\Delta$p (%)] may be calculated by the following formula:

$$[\Delta p\ (\%)] = [(W_t - W_0)/W_0]\ \times\ 100$$

wherein $W_0$ is the weight of the membrane before the graft polymerization reaction and $W_t$ is the weight of the membrane after the graft polymerization reaction.

According to a preferred embodiment, said fuel cell is a direct methanol fuel cell (DMFC).

For the purposes of the present description and of the claims, the expression "direct methanol fuel cell" means a fuel cell in which the methanol is directly fed into the fuel cell, without any previous chemical modification, and is oxidized at the anode.

According to another preferred embodiment, said.fuel cell is a hydrogen fuel cell.

According to a further aspect, the present invention relates to a polymer electrolyte membrane comprising at least one polyolefin grafted with side chains containing proton conductive functional groups, said side chains being grafted to the polyolefin through an oxygen bridge.

According to one preferred embodiment, the amount of grafting [$\Delta p$ (%)] of said side chains is comprised between 10% and 250%, preferably between 40% and 230%.

According to a further aspect, the present invention relates to a process for producing a polymer electrolyte membrane comprising the following steps:

(i) irradiating a polyolefin in the presence of oxygen to obtain an activated polyolefin;

(ii) grafting the obtained activated polyolefin by reacting the same with at least an unsaturated hydrocarbon monomer, said hydrocarbon monomer optionally containing at least one proton conductive functional group, to obtain side chains grafted on the activated polyolefin;

(iii) optionally providing said grafted side chains with proton conductive functional groups, if the latter are not contained in the unsaturated hydrocarbon monomer;

wherein:

- said irradiating step (i) is carried out at a radiation rate in the range of from 0.10 Gy/s to 100 Gy/s, more preferably from 1.0 Gy/s to 10.0 Gy/s;
- said grafting step (ii) is carried out for a time period in the range of from 20 minutes to 5 hours, preferably from 30 minutes to 4 hours.

According to a further aspect, the present invention relates to an apparatus powered by the fuel cell above disclosed. Said apparatus may be an engine for vehicle transportation or, alternatively, an electronic portable device such as, for example, a mobile phone, a laptop computer, a radio, a camcorder, a remote controller.

According to one preferred embodiment, the polyolefin which may be used in the present invention may be selected from: polyethylene, polypropylene, polyvinylchloride, ethylene-propylene copolymer (EPR) or ethylene-propylene-diene terpolymer (EPDM), ethylene vinyl acetate copolymer (EVA), ethylene butylacrylate copolymer (EBA), polyvinylidenedichloride, polyvinylfluoride (PVF), polyvinylidenedifluoride (PVDF), vinylidene fluoride tetrafluoroethylene copolymer (PVDF-TFE), polyvinylidene-hexafluoropropylene copolymer, chlorotrifluoroethylene-ethylene copolymer, chlorotrifluoroethylene-propylene copolymer, polychloroethylene, ethylene-tetrafluoroethylene copolymer (ETFE), propylene-tetrafluoroethylene copolymer, propylene-hexafluoropropylene copolymer, ethylene-hexafluoropropylene copolymer. Polyethylene is particularly preferred. The polyethylene may be: high density polyethylene (HDPE) (d = 0.940-0.970 g/cm$^3$), medium density polyethylene (MDPE) (d = 0.926-0.940 g/cm$^3$), low density polyethylene (LDPE) (d = 0.910-0.926 g/cm$^3$). Low density polyethylene (LDPE) is particularly preferred.

According to one preferred embodiment, the side chains may be selected from any hydrocarbon polymer chain which contains proton conductive functional groups or which may be modified to provide proton conductive functional groups. The side chains are obtained by graft polymerization of unsaturated hydrocarbon monomers, said hydrocarbon monomers being optionally halogenated. Said unsaturated hydrocarbon monomer may be selected from: styrene, chloroalkylstyrene, $\alpha$-methylstyrene, $\alpha,\beta$-dimethylstyrene, $\alpha,\beta,\beta$-trimethylstyrene, ortho-methylstyrene, p-methylstyrene, meta-methylstyrene, $\alpha$-fluorostyrene, trifluorostyrene, p-chloromethylstyrene, acrylic acid, methacrylic acid, vinylalkyl sulfonic acid, divinylbenzene, triallylcianurate, vinylpyridine, and copolymers thereof. Styrene and $\alpha$-methylstyrene are particularly preferred.

According to a preferred embodiment, the proton conductive functional groups may be selected from sulfonic acid groups and phosphoric acid groups. Sulfonic acid groups are particularly preferred.

As already disclosed above, the present invention relates also to a process for producing a polymer electrolyte membrane.

According to one preferred embodiment, the irradiating step (i) may be carried out by γ-rays, X-rays, UV light, plasma irradiation or β-particles. γ-rays are particularly preferred.

According to one preferred embodiment, the total radiation dose in the irradiating step (i) is preferably in the range of from 0.01 MGy to 0.20 MGy, more preferably from 0.02 MGy to 0.10 MGy.

According to one preferred embodiment, after the irradiating step (i), the activated polyolefin comprises organic hydroperoxy groups (-COOH) in an amount of from $3 \times 10^{-3}$ mol/kg to $70 \times 10^{-3}$ mol/kg, preferably from $4 \times 10^{-3}$ mol/kg to $50 \times 10^{-3}$ mol/kg.

The amount of the organic hydroperoxy groups (-COOH) may be determined according to conventional techniques, e.g. by titration with a sodium thiosulfate solution.

The polyolefin may be either crosslinked or non-crosslinked before the irradiating step (i). Preferably, the polyolefin is non-crosslinked.

The activated polyolefin obtained in step (i) is stable overtime if stored at temperature of from -60°C to +50°C, preferably at room temperature. Therefore, it remains activated and it is not necessary to carry out the grafting step (ii) immediately after step (i).

According to one preferred embodiment, the grafting step (ii) may be carried out at a temperature of from 15°C to 150°C, more preferably from 45°C to 55°C.

According to one preferred embodiment, the grafting step (ii) may be carried out in the presence of at least one hydroperoxy groups decomposition catalyst. Said catalyst may be selected from ferrous, cobalt, chromium or copper salts such as, for example, ferrous sulfate, ferrous ammonium sulfate, cobalt(II) chloride, chromium(III) chloride, copper chloride. Ferrous sulfate is particularly preferred. Said catalyst is preferably added in an amount of from 0.5 mg/ml to 10 mg/ml, more preferably from 1.0 mg/ml to 6.0 mg/ml.

According to one preferred embodiment, in the grafting step (ii), the hydrocarbon unsaturated monomers are dissolved in a solvent which may be selected from: ketones, such as acetone; alcohols, such as methanol; aromatic hydrocarbons, such as benzene and xylene; cyclic hydrocarbons, such as cyclohexane; ethers such as dimethylether; esters such as ethyl acetate; amides such as dimethylformamide.

According to one preferred embodiment, step (iii) may be carried out by using a sulfonating or a phosphorating agent, operating in inert-gas atmosphere, or in air. The sulfonating or phosphorating agent may be selected from: chlorosulfonic acid, fluorosulfonic acid, sulfuric acid, chlorophosphoric acid. Sulfuric acid is particularly preferred. Step (iii) may be carried out at a temperature of from 50°C to 150°C, preferably from 70°C to 100°.

The present invention is now further illustrated with reference to the following attached figures:

Figure 1: is a schematic representation of a liquid feed organic fuel cell;
Figure 2: is a graph showing cell resistance as a function of temperature;
Figure 3: is a schematic representation of a device used for the methanol permeation determination.

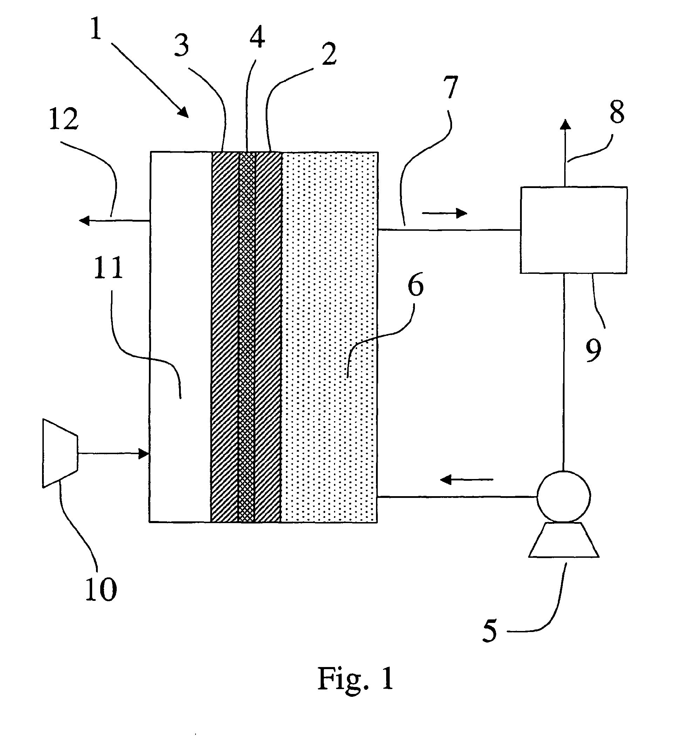

Figure 1 shows a fuel cell (1) comprising an anode (2), a cathode (3) and the polymer electrolyte membrane (4) according to the present invention. Preferably, the anode, the cathode and the polymer electrolyte membrane are integrated to form a single composite structure, with the polymer electrolyte membrane interposed between the two electrodes, commonly known as a membrane electrode assembly (MEA). Said membrane electrode assembly is usually placed in a housing which is not represented in Figure 1.

Anode (2) and cathode (3) typically comprise catalyst particles (e.g., Pt or its alloys) ooptionally supported on carbon particles. The catalyst particles are dispersed throughout a polymeric binder or matrix which typically comprises either a proton-conductive polymer and/or a fluoropolymer. When a proton-conductive material is used, it typically comprises the same proton-conductive polymer used for the polymer electrolyte membrane. The polymeric binder or matrix provides a robust structure for catalyst retention, adheres well to the polymer electrolyte membrane, aids in water management within the cell and enhances the ion exchange capability of the electrodes.

Anode (2) and cathode (3) are preferably formed from a platinum or from a platinum based alloy, unsupported or supported on a high surface area carbon. In the case of platinum based alloy, platinum is usually alloyed with another metal such as, for example, ruthenium, tin, iridium, osmium or rhenium. In general, the choice of the alloy depends on the fuel to be used in the fuel cell. Platinum-ruthenium is preferable for electro-oxidation of methanol.

A pump (5) circulates an aqueous solution of an organic fuel in the anode compartment (6). The organic fuel is withdrawn via an appropriate outlet conduit (7) and may be recirculated. Carbon dioxide formed at the anode (2) may be vented via an outlet conduit (8) within tank (9). The fuel cell is also provided with an oxygen or air compressor (10) to feed humidified oxygen or air into the cathode compartment (11).

Prior to operation, an aqueous solution of the organic fuel such as, for example, methanol, is introduced into the anode compartment (6) of the fuel cell, while oxygen or air is introduced into the cathode compartment (11). Next, an external electrical load (not showed in Fig. 1) is connected between anode (2) and cathode (3). At this time, the organic fuel is oxidized at the anode and leads to the production of carbon dioxide, protons and electrons. Electrons generated at the anode (2) are conducted via external electrical load to the cathode (3). The protons generated at the anode (2) migrate through the polymer electrolyte membrane (4) to cathode (3) and react with oxygen and electrons (which are transported to the cathode via the external electrical load) to form water and carbon dioxide. Water and carbon dioxide produced are transported out of the cathode chamber (11) by flow of oxygen, through outlet (12).

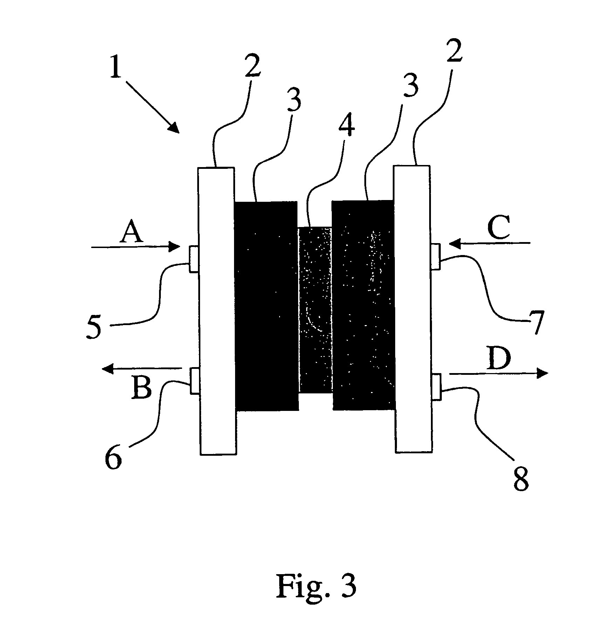

Figure 3 shows a device used for the methanol permeation determination. The polymer electrolyte membrane (4) is sandwiched between a pair of graphite plates (3) provided with an array of grooves on the surface which contacts said polymer electrolyte membrane (4). Said graphite plates (3) are useful in order to distribute both the methanol aqueous solution and the water evenly on the faces of the polymer electrolyte membrane (4). Said assembly [(graphite plates (3) + polymer electrolyte membrane(4)] is put between two copper plates (2) having inlet conduits (5), (7) and outlet conduits (6), (8): the membrane is tightened by rubber gaskets. Said inlet conduits (5), (7) and outlet conduits (6), (8) flow into the graphite plates. Two tanks containing an aqueous methanol solution and distilled water respectively (not represented in Figure 3), are connected to the device (1). The aqueous methanol solution is fed [arrow (A)] through the inlet conduit (5) while water is fed [(arrow (C)] through the inlet conduit (7). One part of the aqueous methanol solution fed through the inlet conduit (5) passes through the membrane (4) while the remaining part comes out [(arrow (B)] from the outlet conduit (6). The aqueous methanol solution which passes through the membrane (4) mixed with the water fed [(arrow (C)] through the inlet conduit (7) comes out [(arrow (D)] from the outlet conduit (8).

The methanol permeation is determined by gas-chromatographic analysis of the aqueous methanol solution recovered both from the outlet conduits (6) and the outlet conduit (8), [arrow (B)] and [arrow (D)] respectively.

The present invention will be further illustrated hereinbelow by means of examples.

EXAMPLE 1

A low density polyethylene (LDPE) film was irradiated by γ-rays at a total radiation dose of 0.05 MGy, at a radiation rate of 5.2 Gy/s, from a $^{60}$Co-irradiation source, in air, at room temperature.

Styrene (purity ≥99%) from Aldrich was washed with an aqueous solution of sodium hydroxide at 30% and then washed with distilled water until the wash water had a neutral pH. The so treated styrene was then dried over calcium chloride ($CaCl_2$) and was distilled under reduced pressure.

Then, using the styrene purified as above, a styrene/methanol solution (60:40 vol.%) containing 2 mg/ml of ferrous sulfate ($FeSO_4$●$7H_2O$) was prepared.

The irradiated LDPE film was immersed in 100 ml of the styrene/methanol solution prepared as above using a reaction vessel equipped with a reflux condenser. The reaction vessel was then heated in a water bath until boiling of the solution.

After 1 hour (grafting time) the LDPE film was removed from the reaction vessel, washed with toluene and methanol three times, then dried in air and vacuum at room temperature to constant weight.

Then, the grafted LDPE film was immersed in a concentrated sulfuric acid solution (96%) and heated for 2 hours at 98°C in a glass ampoule supplied with reflux condenser. Thereafter, the LDPE film was taken out of the solution, was washed with different aqueous solutions of sulfuric acid (80%, 50% and 20% respectively), and finally with distilled water until the wash water had a neutral pH. Then, the film was dried in air at room temperature and after in vacuum at 50°C to constant weight obtaining a membrane according to the present invention.

EXAMPLE 2

A membrane was prepared as disclosed in Example 1 the only difference being the grafting time: 2 hours.

EXAMPLE 3

A membrane was prepared as disclosed in Example 1 the only difference being the grafting time: 4 hours.

EXAMPLE 4

The membranes obtained as disclosed in the above Examples 1-3, were subjected to the following characterizations.

(a) Determination of the amount of the organic hydroperoxy groups after irradiation

The determination of the amount of the organic hydroperoxy groups after irradiation, was carried out as follows.

2 g of the irradiated polymer were added to 10 ml of chloroform in a flask and were maintained under stirring until complete dissolution.

15 ml of acetic acid and 1 ml of potassium iodine were then added. The flask was rapidly closed, maintained under stirring for 1 min at room temperature and, subsequently, for 5 min in the dark at a temperature comprised between 15°C and 25 °C. Then, 75 ml of distilled water were added. The released iodine was then titrated with a 0.002 N sodium tiosulfate solution, under vigorous stirring, using a starch solution as indicator. At the same time a standard was titrated.

The amount of organic hydroperoxy groups (-COOH), expressed in mol of active oxygen per kg of polymer (mol/kg), was calculated according to the following formula:

$$\texttt{(-COOH) groups = 32(V*N/m)*1000}$$

wherein V (expressed in ml) is the volume of the standard sodium tiosulfate solution, after correction with the standard, N is the normal concentration of the sodium tiosulfate solution and m is the weight of the analyzed polymer.

The obtained results are given in Table 1 and are the arithmetical average value of two measurements.

(b) Determination of the amount of grafting [$\Delta$p (%)]

The amount of grafting [$\Delta$p (%)] was calculated as disclosed above: the obtained results are given in Table 1.

(c) Determination of ion-exchange capacity (IEC) after sulfonation

The ion-exchange capacity (IEC) was determined as follows.

The membranes obtained as disclosed in the above Examples 1-3 were immersed in 1 N HCl aqueous solution, at room temperature, for 1 hour, in order to obtain the samples in the protonic form. Thereafter, the membranes were washed with deionised water at 50°C-60°C and were dried in oven at 80°C under vacuum for 2 hours.

The membranes were then immersed in a 1M NaCl solution for 1 h, in order to exchange the hydrogen ions with sodium ions. The hydrogen ions which passed through the membranes were titrated by neutralization with an 0.01 N NaOH aqueous solution in order to determine the ion-exchange capacity of the membranes. The obtained results, expressed in milli-equivalent/g, are given in Table 1.

TABLE 1

| EXAMPLE | (-COOH) (mol/kg) | Grafting time (h) | [$\Delta$p (%)] | IEC (milli-equivalent/g) |
|---|---|---|---|---|
| 1 | $4.6 \times 10^{-3}$ | 1 | 73.5 | 2.05 |
| 2 | $4.6 \times 10^{-3}$ | 2 | 100 | 2.36 |
| 3 | $4.6 \times 10^{-3}$ | 4 | 220 | 3.51 |

EXAMPLE 5

Cell resistance measurement

Fuel cell electrodes ELAT type commercialized by E-TEK Inc. (Somerset, N.J.), were used to obtain a membrane electrode assembly (MEA). The carbon electrodes contained Pt in an amount of 0.5 mg/cm$^2$ both for the anode and the cathode. The electrodes were put into contact with the membrane each at opposite faces of the membrane and the MEA assembly so obtained was installed in a fuel cell housing that was tightened at 1 kg/cm$^2$ pressure.

The geometrical electrode area of the electrode/membrane assembly was 5 cm$^2$. The MEA assembly was installed in a single cell test system which was purchase by Glob Tech Inc. The system was composed of two copper current collector end plates and two graphite plates containing rib channel patterns allowing the passage of an aqueous solution to the anode and humidified oxygen to the cathode. The single cell was connected to an AC Impedance Analyser type 4338B from Agilent. The fuel cell so constructed was operated at different temperatures in a range comprised between 20°C and 90°C. Water was supplied to the anode through a peristaltic pump and a preheater maintained at the cell temperature. Humidified oxygen was fed to the cathode at amospheric pressure. The oxygen humidifier was maintained at a temperature 10°C above the cell temperature. The operating conditions simulated those of direct methanol fuel cell (DMFC). Cell resistance was measured at the fixed frequency of 1 KHz and under an open circuit by means of the AC Impedance Analyser above reported operating in the temperatures range of from 20°C to 90°C.

After inserting the MEA assembly into the single test housing, the cell was equilibrated by distilled water and humidified oxygen. After obtaining a constant value of resistance, the cell was heated up to 90°C stepwise and resistance measurements, expressed in $\Omega$ cm$^2$, were carried out at different temperatures.

The tested membranes were the following:

- Nafion® 112 by Dupont (50 $\mu$m thickness) ;
- Nafion® 117 by Dupont (170 $\mu$m thickness);
- membrane obtained according to Example 3 (20 $\mu$m thickness).

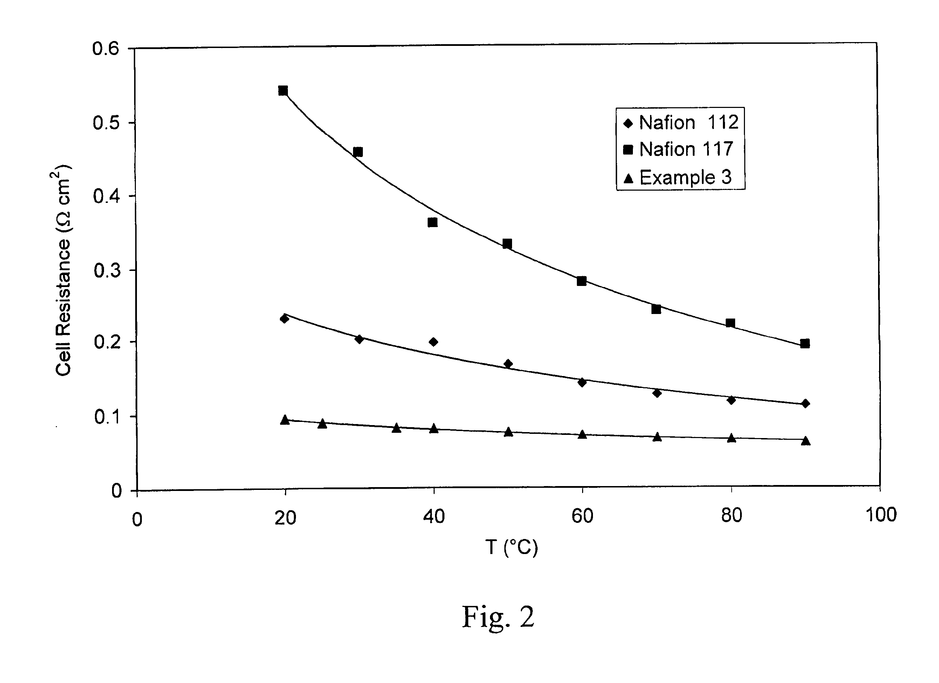

The obtained results are given in Table 2 and in Fig. 2.

In Table 2 was also reported the percentage difference (R%) between the value of cell resistance at 20°C and the value of cell resistance at 90°C with respect to the value of cell resistance at 90°C according to the following formula:

$$(R\%) = [(R_{20°C} - R_{90°C})/R_{90°C}] \times 100$$

wherein $R_{20°C}$ is the value of cell resistance at 20°C and $R_{90°C}$ is the value of cell resistance at 90°C.

Table 2 and Fig. 2 clearly show that the fuel cell having the membranes according to the present invention (Example 3) has a high performance already at low temperatures (20°C) and maintain said high performances in the whole temperatures range.

TABLE 2

| TEMPERATURE (°C) | CELL RESISTANCE ($\Omega$ cm$^2$) | | |
|---|---|---|---|
| | Nafion® 112 | Nafion® 117 | Example 3 |
| 20 | 0.230 | 0.540 | 0.090 |
| 25 | - | - | 0.088 |
| 30 | 0.200 | 0.460 | - |
| 35 | - | - | 0.081 |
| 40 | 0.195 | 0.360 | 0.080 |
| 50 | 0.165 | 0.330 | 0.075 |
| 60 | 0.140 | 0.280 | 0.071 |
| 70 | 0.125 | 0.240 | 0.067 |
| 80 | 0.115 | 0.220 | 0.065 |
| 90 | 0.110 | 0.190 | 0.061 |
| (R%) | | | |
| | 109 | 184 | 47.5 |

Methanol permeation determination

The methanol permeation determination was carried out according to the method described above using a device schematically represented in Fig. 3. The membranes utilized are those of Table 3.

Two tanks of equal volume (200 ml) containig a 2M methanol solution and distilled water were connected to the device through two peristaltic pumps (not represented in Figure 3): the flow speed of the methanol and of the distilled water to the inlet conduits (5) and (7) respectively, was 1.92 ml/min.

Aliquots of 2.4 ml of the outlet solutions both from the outlet conduit (6) and the outlet conduit (8), [(arrow (B)] and [(arrow (D)] respectively, were taken after 15 min and 200 $\mu$l of the same were analysed by means of a cromathograph VEGA Series 2 GC6000 from Carlo Erba equipped with a Carbopack 3% SP 1500 column and a flame ionization detector at 80°C. As a standard a 100 ppm aqueous methanol solution was used. The obtained results are given in Table 3.

TABLE 3

| EXAMPLE | l (μm) | p (mol min$^{-1}$ cm$^{-1}$) | p* (mol min$^{-1}$ cm$^{-1}$) |
|---|---|---|---|
| 1 | 55 | $0.56 \times 10^{-6}$ | $3.08 \times 10^{-9}$ |
| 2 | 60 | $0.57 \times 10^{-6}$ | $3.42 \times 10^{-9}$ |
| 3 | 20 | $0.97 \times 10^{-6}$ | $1.94 \times 10^{-9}$ |
| Nafion® 112 | 50 | $2.14 \times 10^{-6}$ | $1.07 \times 10^{-8}$ |
| Nafion® 117 | 170 | $7.78 \times 10^{-7}$ | $1.32 \times 10^{-8}$ |
| (1) : membrane; (p) : methanol permation rate; (p*) : methanol permation rate normalized to the membrane thickness. | | | |

The data above reported show that the permeation rate of the membranes according to the present invention (Examples 1-3) are lower than the permation rate of the membranes of the prior art (Nafion® 112 and Nafion® 117).

**Claims**

1. Fuel cell comprising:

   (a) an anode;
   (b) a cathode;
   (c) a polymer electrolyte membrane placed between the anode and the cathode which comprises at least one polyolefin grafted with side chains containing proton conductive functional groups, said side chains being grafted to the polyolefin through an oxygen bridge;

   wherein said fuel cell has:

   - a value of cell resistance at 90°C not higher than 0.30 Ω cm$^2$;
   - a value of cell resistance at 20°C differing from the value of cell resistance at 90°C of an amount not higher than 90% with respect to the value of cell resistance at 90°C.

2. Fuel cell according to claim 1, wherein the value of cell resistance at 90°C is comprised between 0.02 Ω cm$^2$ and 0.25 Ω cm$^2$.

3. Fuel cell according to claims 2, wherein the value of cell resistance at 90°C is comprised between 0.05 Ω cm$^2$ and 0.20 Ω cm$^2$.

4. Fuel cell according to any one of claims 1 to 3, wherein the value of cell resistance at 20°C differs from the value of cell resistance at 90°C of an amount not higher than 70% with respect to the value of cell resistance at 90°C.

5. Fuel cell according to claim 4, wherein the value of cell resistance at 20°C differs Erom the value of cell resistance at 90°C of an amount not higher than 50% with respect to the value of cell resistance at 90°C.

6. Fuel cell according to any one of the preceding claims, wherein the amount of grafting of the side chains is comprised between 10% and 250%.

7. Fuel cell according to claim 6, wherein the amount of grafting of the side chains is comprised between 40% and 230%.

8. Fuel cell according to any one of the preceding claims, which is a direct methanol fuel cell.

9. Fuel cell according to any one of the preceding claims, which is a hydrogen fuel cell.

10. Fuel cell according to any one of the preceding claims, wherein the polyolefin is selected from: polyethylene, polypropylene, polyvinylchloride, ethylene-propylene copolymers (EPR) or ethylene-propylene-diene terpolymers (EPDM), ethylene vinyl acetate copolymer (EVA), ethylene butylacrylate copolymer (EBA), polyvinylidenedichloride, polyvinylfluoride (PVF), polyvinylidenedifluoride (PVDF), vinylidene fluoride tetrafluoroethylene copolymer (PVDF-TFE), polyvinylidene-hexafluoropropylene copolymer, chlorotrifluoroethylene-ethylene copolymer, chlorotrifluoroethylene-propylene copolymer, polychloroethylene, ethylene-tetrafluoroethylene copolymer (ETFE), propylene-tetrafluoroethylene copolymer, propylene-hexafluoropropylene copolymer, ethylene-hexafluoropropylene copolymer.

11. Fuel cell according to claim 10, wherein the polyolefin is polyethylene.

12. Fuel cell according to claim 11, wherein the polyolefin is low density polyethylene (LDPE).

13. Fuel cell according to any one of the preceding claims, wherein the side chains are selected from any hydrocarbon polymer chain which contains proton conductive functional groups or which may be modified to provide proton conductive functional groups.

14. Fuel cell according to claim 13, wherein the side chains are obtained by graft polymerization of unsaturated hydrocarbon monomers, said hydrocarbon monomers being optionally halogenated.

15. Fuel cell according to claim 14, wherein the unsaturated hydrocarbon monomer are selected from: styrene, chloroalkylstyrene, α-methylstyrene, α,β-dimethylstyrene, α,β,β-trimethylstyrene, ortho-methylstyrene, p-methylstyrene, meta-methylstyrene, α-fluorostyrene, trifluorostyrene, p-chloromethylstyrene, acrylic acid, methacrylic acid, vinylalkyl sulfonic acid, divinylbenzene, triallylcianurate, vinylpyridine, and copolymers thereof.

16. Fuel cell according to claim 15, wherein the unsaturated hydrocarbons monomers are styrene or α-methylstyrene.

17. Fuel cell according to any one of the preceding claims, wherein the proton conductive functional groups are selected from sulfonic acid groups and phosphoric acid groups.

18. Fuel cell according to claim 17, wherein the proton conductive functional groups are selected from sulfonic acid groups.

19. Polymer electrolyte membrane comprising at least one polyolefin grafted with side chains containing proton conductive functional groups, said side chains being grafted to the polyolefin through an oxygen bridge.

20. Polymer electrolyte membrane according to claim 19, wherein the amount of grafting [Δp (%)] of the side chains is comprised between 10% and 250%.

21. Polymer electrolyte membrane according to claim 20, wherein the amount of grafting [Δp (%)] of the side chains is comprised between 40% and 230%.

22. Polymer electrolyte membrane according to any one of claims 19 to 21, wherein the polyolefin is selected from: polyethylene, polypropylene, polyvinylchloride, ethylene-propylene copolymers (EPR) or ethylene-propylene-diene terpolymers (EPDM), ethylene vinyl acetate copolymer (EVA), ethylene butylacrylate copolymer (EBA), polyvinylidenedichloride, polyvinylfluoride (PVF), polyvinylidenedifluoride (PVDF), vinylidene fluoride tetrafluoroethylene copolymer (PVDF-TFE), polyvinylidene-hexafluoropropylene copolymer, chlorotrifluoroethylene-ethylene copolymer, chlorotrifluoroethylene-propylene copolymer, polychloroethylene, ethylene-tetrafluoroethylene copolymer (ETFE), propylene-tetrafluoroethylene copolymer, propylene-hexafluoropropylene copolymer, ethylene-hexafluoropropylene copolymer.

23. Polymer electrolyte membrane according to any one of claims 20 to 23, wherein the polyolefin is polyethylene.

24. Polymer electrolyte membrane according to any one of claims 20 to 23, wherein the polyolefin is low density polyethylene (LDPE).

25. Polymer electrolyte membrane according to any one of claims 20 to 24, wherein the side chains are selected from any hydrocarbon polymer chain which contains proton conductive functional groups or which may be modified to provide proton conductive functional groups.

26. Polymer electrolyte membrane according to claim 25, wherein the side chains are obtained by graft polymerization of unsaturated hydrocarbon monomers, said hydrocarbon monomers being optionally halogenated.

27. Polymer electrolyte membrane according to claim 26, wherein the unsaturated hydrocarbon monomer are selected from: styrene, chloroalkylstyrene, $\alpha$-methylstyrene, $\alpha,\beta$-dimethylstyrene, $\alpha,\beta,\beta$-trimethylstyrene, ortho-methylstyrene, p-methylstyrene, meta-methylstyrene, $\alpha$-fluorostyrene, trifluorostyrene, p-chloromethylstyrene, acrylic acid, methacrylic acid, vinylalkyl sulfonic acid, divinylbenzene, triallylcianurate, vinylpyridine, and copolymers thereof.

28. Polymer electrolyte membrane according to claim 28, wherein the unsaturated hydrocarbons monomers are styrene or $\alpha$-methylstyrene.

29. Polymer electrolyte membrane according to any one of claims 19 to 28, wherein the proton conductive functional groups are selected from sulfonic acid groups and phosphoric acid groups.

30. Polymer electrolyte membrane according to claim 29, wherein the proton conductive functional groups are selected from sulfonic acid groups.

31. Process for producing a polymer electrolyte membrane comprising the following steps:

(i) irradiating a polyolefin in the presence of oxygen to obtain an activated polyolefin;
(ii) grafting the obtained activated polyolefin by reacting the same with at least an unsaturated hydrocarbon monomer, said hydrocarbon monomer optionally containing at least one proton conductive functional group, to obtain side chains grafted on the activated polyolefin;
(iii) optionally providing said grafted side chains with proton conductive functional groups, if the latter are not contained in the unsaturated hydrocarbon monomer;

wherein:

- said irradiating step (i) is carried out at a radiation rate in the range of from 0.10 Gy/s to 100 Gy/s;
- said grafting step (ii) is carried out for a time period in the range of from 20 minutes to 5 hours.

32. Process according to claim 31, wherein the irradiation step (i) is carried out at a radiation rate of from 1.0 Gy/s to 10.0 Gy/s.

33. Process according to claims 31 or 32, wherein the grafting step (ii) is carried out for a time period in the range of from 30 minutes to 4 hours.

34. Process according to any one of claims 31 to 33, wherein the irradiating step (i) is carried out by $\gamma$-rays, X-rays, UV light, plasma irradiation or $\beta$-particles.

35. Process according to claim 34, wherein the irradiating step (i) is carried out by $\gamma$-rays.

36. Process according to any one of claims 31 to 35, wherein the total radiation dose in the irradiating step (i) is in the range of from 0.01 MGy to 0.20 MGy.

37. Process according to claim 36, wherein the total radiation dose in the irradiating step (i) is in the range of from 0.02 MGy to 0.10 MGy.

38. Process according to any one of claims 31 to 37, wherein after the irradiating step (i), the activated polyolefin comprises organic hydroperoxy in an amount of from $3 \times 10^{-3}$ mol/kg to $70 \times 10^{-3}$ mol/kg.

39. Process according to claim 38, wherein after the irradiating step (i), the activated polyolefin comprises organic hydroperoxy groups in an amount of from $4 \times 10^{-3}$ mol/kg to $50 \times 10^{-3}$ mol/kg.

40. Process according to any one of claims 31 to 39, wherein the polyolefin is crosslinked or non-crosslinked before the irradiating step (i).

**41.** Process according to claim 40, wherein the polyolefin is non-crosslinked.

**42.** Process according to any one of claims 31 to 40, wherein the grafting step (ii) is carried out at a temperature of from 15°C to 150°C.

**43.** Process according to claim 42, wherein the grafting step (ii) is carried out at a temperature of from 45°C to 55°C.

**44.** Process according to any one of claims 31 to 43, wherein the grafting step (ii) is carried out in the presence of at least one hydroperoxy groups decomposition catalyst.

**45.** Process according to claim 44, wherein the hydroperoxy groups decomposition catalyst is selected from: ferrous sulfate, ferrous ammonium sulfate, cobalt(II) chloride, chromium(III) chloride, copper chloride.

**46.** Process according to claim 45, wherein the hydroperoxy groups decomposition catalyst is ferrous sulfate.

**47.** Process according to any one of claims 44 to 46, wherein the hydroperoxy groups decomposition catalyst is added in an amount of from 0.5 mg/ml to 10 mg/ml.

**48.** Process according to claim 47, wherein the hydroperoxy groups decomposition catalyst is added in an amount of from 1.0 mg/ml to 6.0 mg/ml.

**49.** Process according to any one of claims 31 to 48, wherein, in the grafting step (ii), the hydrocarbon unsaturated monomers are dissolved in a solvent.

**50.** Process according to claim 49, wherein the solvent is selected from: ketones; alchools; aromatic hydrocarbons; cyclic hydrocarbons; ethers; esters.

**51.** Process according to any one of claims 31 to 50, wherein step (iii) is carried out by using a sulfonating or a phosphorating agent, in inert-gas atmosphere, or in air.

**52.** Process according to claim 51, wherein the sulfonating agent is selected from: chlorosulfonic acid, fluorosulfonic acid or sulfuric acid.

**53.** Process according to claim 51, wherein the phosphorating agent is selected from: chlorophosphoric acid or fluorophosphoric acid.

**54.** Process according to any one of claims 31 to 51, wherein step (iii) is carried out at a temperature of from 50°C to 150°C.

**55.** Process according to claim 54, wherein step (iii) is carried out at a temperature of from 70°C to 100°C.

**56.** Apparatus powered by a fuel cell according to any one of claims 1 to 18.

**57.** A vehicle powered by a fuel cell according to any one of claims 1 to 18.

**58.** An electronic portable device powered by a fuel cell according to any one of claims 1 to 18.


**Patentansprüche**

**1.** Brennstoffzelle, umfassend:

(a) eine Anode,
(b) eine Kathode,
(c) eine zwischen der Anode und der Kathode plazierte Polymer-Elektrolytmembran, die mindestens ein Polyolefin, das mit Seitenketten, die protonenleitende funktionelle Gruppen enthalten, gepfropft ist, umfaßt, wobei die Seitenketten über eine Sauerstoffbrücke auf das Polyolefin gepfropft sind;

wobei die Brennstoffzelle aufweist:

- einen Wert des Zellwiderstands bei 90°C nicht höher als 0,30 $\Omega$ cm$^2$,
- einen Wert des Zellwiderstands bei 20°C, der sich von dem Wert des Zellwiderstands bei 90°C in einer Größe von nicht mehr als 90 % in Bezug auf den Wert des Zellwiderstands bei 90°C unterscheidet.

2. Brennstoffzelle gemäß Anspruch 1, bei der der Wert des Zellwiderstands bei 90°C zwischen 0,02 $\Omega$ cm$^2$ und 0,25 $\Omega$ cm$^2$ liegt.

3. Brennstoffzelle gemäß Anspruch 3, bei der der Wert des Zellwiderstands bei 90°C zwischen 0,05 $\Omega$ cm$^2$ und 0,20 $\Omega$ cm$^2$ liegt.

4. Brennstoffzelle gemäß mindestens einem der Ansprüche 1 bis 3, bei der der Wert des Zellwiderstands bei 20°C sich von dem Wert des Zellwiderstands bei 90°C in einer Größe von nicht mehr als 70 % in Bezug auf den Wert des Zellwiderstands bei 90°C unterscheidet.

5. Brennstoffzelle gemäß Anspruch 4, bei der der Wert des Zellwiderstands bei 20°C sich von dem Wert des Zellwiderstands bei 90°C in einer Größe von nicht mehr als 50 % in Bezug auf den Wert des Zellwiderstands bei 90°C unterscheidet.

6. Brennstoffzelle gemäß mindestens einem der vorhergehenden Ansprüche, in der die Pfropfmenge der Seitenketten zwischen 10 und 250 % liegt.

7. Brennstoffzelle gemäß Anspruch 6, in der die Pfropfmenge der Seitenketten zwischen 40 und 230 % liegt.

8. Brennstoffzelle gemäß mindestens einem der vorhergehenden Ansprüche, die eine Direkt-Methanol-Brennstoffzelle ist.

9. Brennstoffzelle gemäß mindestens einem der vorhergehenden Ansprüche, die eine Wasserstoff-Brennstoffzelle ist.

10. Brennstoffzelle gemäß mindestens einem der vorhergehenden Ansprüche, bei der der Polyolefin ausgewählt ist aus Polyethylen, Polypropylen, Polyvinylchlorid, Ethylen-Propylen-Copolymeren (EPR) oder Ethylen-Propylen-Dien-Terpolymeren (EPDM), EthylenVinylacetat-Copolymer (EVA), Ethylen-Butylacrylat-Copolymer (EBA), Polyvinylidendichlorid, Polyvinylfluorid (PVF), Polyvinylidendifluorid (PVDF), Vinylidenfluorid-Tetrafluorethylen-Copolymer (PVDF-TFE), Polyvinyliden-Hexafluorpropylen-Copolymer, Chlortrifluorethylen-Ethylen-Copolymer, Chlortrifluorethylen-Propylen-Copolymer, Polychlorethylen, Ethylen-Tetrafluorethylen-Copolymer (ETFE), Propylen-Tetrafluorethylen-Copolymer, Propylen-Hexafluorpropylen-Copolymer, Ethylen-Hexafluorpropylen-Copolymer.

11. Brennstoffzelle gemäß Anspruch 10, in der das Polyolefin Polyethylen ist.

12. Brennstoffzelle gemäß Anspruch 11, in der das Polyolefin Polyethylen niedriger Dichte (LDPE) ist.

13. Brennstoffzelle gemäß mindestens einem der vorhergehenden Ansprüche, in der die Seitenketten ausgewählt sind aus einer beliebigen Kohlenwasserstoff-Polymerkette, die protonenleitende funktionelle Gruppen enthält, oder die modifiziert werden kann, um protonenleitende funktionelle Gruppen zu liefern.

14. Brennstoffzelle gemäß Anspruch 13, in der die Seitenketten erhalten werden durch Pfropfpolymerisation ungesättigter Kohlenwasserstoffmonomere, wobei die Kohlenwasserstoffmonomere optional halogeniert sind.

15. Brennstoffzelle gemäß Anspruch 14, in der die ungesättigten Kohlenwasserstoffmonomere ausgewählt sind aus Styrol, Chloralkylstyrol, $\alpha$-Methylstyrol, $\alpha,\beta$-Dimethylstyrol, $\alpha,\beta,\beta$-Trimethylstyrol, ortho-Methylstyrol, p-Methylstyrol, meta-Methylstyrol, $\alpha$-Fluorstyrol, Trifluorstyrol, p-Chlormethylstyrol, Acrylsäure, Methacrylsäure, Vinylalkylsulfonsäure, Divinylbenzol, Triallylcyanurat, Vinylpyridin und Copolymeren davon.

16. Brennstoffzelle gemäß Anspruch 15, in der die ungesättigten Kohlenwasserstoffmonomere Styrol oder $\alpha$-Methylstyrol sind.

17. Brennstoffzelle gemäß mindestens einem der vorhergehenden Ansprüche, in der die protonenleitenden funktionellen Gruppen ausgewählt sind aus Sulfonsäuregruppen und Phosphorsäuregruppen.

**18.** Brennstoffzelle gemäß Anspruch 17, in der die protonenleitenden funktionellen Gruppen aus Sulfonsäuregruppen ausgewählt sind.

**19.** Polymer-Elektrolytmembran, die mindestens ein Polyolefin umfaßt, das mit Seitenketten gepfropft ist, die protonenleitende funktionelle Gruppen enthalten, wobei die Seitenketten über eine Sauerstoffbrücke auf das Polyolefin gepfropft sind.

**20.** Polymer-Elektrolytmembran gemäß Anspruch 19, in der die Pfropfmenge [Δp (%)] der Seitenketten zwischen 10 und 250 % liegt.

**21.** Polymer-Elektrolytmembran gemäß Anspruch 20, in der die Pfropfmenge [Δp (%)] der Seitenketten zwischen 40 und 230 % liegt.

**22.** Polymer-Elektrolytmembran gemäß mindestens einem der Ansprüche 19 bis 21, in der das Polyolefin ausgewählt ist aus Polyethylen, Polypropylen, Polyvinylchlorid, Ethylen-Propylen-Copolymeren (EPR) oder Ethylen-Propylen-Dien-Terpolymeren (EPDM), Ethylen-Vinylacetat-Copolymer (EVA), Ethylen-Butylacrylat-Copolymer (EBA), Polyvinylidendichlorid, Polyvinylfluorid (PVF), Polyvinylidendifluorid (PVDF), Vinylidenfluorid-Tetrafluorethylen-Copolymer (PVDF-TFE), Polyvinyliden-Hexafluorpropylen-Copolymer, Chlortrifluorethylen-Ethylen-Copolymer, Chlortrifluorethylen-Propylen-Copolymer, Polychlorethylen, Ethylen-Tetrafluorethylen-Copolymer (ETFE), Propylen-Tetrafluorethylen-Copolymer, Propylen-Hexafluorpropylen-Copolymer, Ethylen-Hexafluorpropylen-Copolymer.

**23.** Polymer-Elektrolytmembran gemäß mindestens einem der Ansprüche 20 bis 22, in der das Polyolefin Polyethylen ist.

**24.** Polymer-Elektrolytmembran gemäß mindestens einem der Ansprüche 20 bis 23, in der das Polyolefin Polyethylen niedriger Dichte (LDPE) ist.

**25.** Polymer-Elektrolytmembran gemäß mindestens einem der Ansprüche 20 bis 24, in der die Seitenketten ausgewählt sind aus einer beliebigen Kohlenwasserstoff-Polymerkette, die protonenleitende funktionelle Gruppen enthält, oder die modifiziert werden kann, um protonenleitende funktionelle Gruppen zu liefern.

**26.** Polymer-Elektrolytmembran gemäß Anspruch 25, in der die Seitenketten durch Pfropfpolymerisation ungesättigter Kohlenwasserstoffmonomere erhalten werden, wobei die Kohlenwasserstoffmonomere optional halogeniert sind.

**27.** Polymer-Elektrolytmembran gemäß Anspruch 26, in der die ungesättigten Kohlenwasserstoffmonomere ausgewählt sind aus Styrol, Chloralkylstyrol, α-Methylstyrol, α,β-Dimethylstyrol, α,β,β-Trimethylstyrol, ortho-Methylstyrol, p-Methylstyrol, meta-Methylstyrol, α-Fluorstyrol, Trifluorstyrol, p-Chlormethylstyrol, Acrylsäure, Methacrylsäure, Vinylalkylsulfonsäure, Divinylbenzol, Triallylcyanurat, Vinylpyridin und Copolymeren davon.

**28.** Polymer-Elektrolytmembran gemäß Anspruch 28, in der die ungesättigten Kohlenwasserstoffmonomere Styrol oder α-Methylstyrol sind.

**29.** Polymer-Elektrolytmembran gemäß mindestens einem der Ansprüche 19 bis 28, in der die protonenleitenden funktionellen Gruppen aus Sulfonsäuregruppen und Phosphorsäuregruppen ausgewählt sind.

**30.** Polymer-Elektrolytmembran gemäß Anspruch 29, in der die protonenleitenden funktionellen Gruppen aus Sulfonsäuregruppen ausgewählt sind.

**31.** Verfahren zur Herstellung einer Polymer-Elektrolytmembran, das die folgenden Schritte umfaßt:

(i) Bestrahlen eines Polyolefins in Gegenwart von Sauerstoff, um ein aktiviertes Polyolefin zu erhalten,
(ii) Pfropfen des erhaltenen aktivierten Polyolefins durch Umsetzen desselben mit mindestens einem ungesättigten Kohlenwasserstoffmonomer, wobei das Kohlenwasserstoffmonomer optional mindestens eine protonenleitende funktionelle Gruppe enthält, um Seitenketten zu erhalten, die auf das aktivierte Polyolefin gepfropft sind,
(iii) gegebenenfalls Versehen der gepfropften Seitenketten mit protonenleitenden funktionellen Gruppen, wenn letztere nicht in dem ungesättigten Kohlenwasserstoffmonomer enthalten sind;

bei dem:

- der Bestrahlungsschritt (i) bei einer Bestrahlungsrate im Bereich von 0,10 Gy/s bis 100 Gy/s durchgeführt wird,
- der Pfropfschritt (ii) durchgeführt wird für einen Zeitraum im Bereich von 20 Minuten bis 5 Stunden.

32. Verfahren gemäß Anspruch 31, bei dem der Bestrahlungsschritt (i) bei einer Bestrahlungsrate von 1,0 Gy/s bis 10,0 Gy/s durchgeführt wird.

33. Verfahren gemäß Anspruch 31 oder 32, bei dem der Pfropfschritt (ii) für einen Zeitraum im Bereich von 30 Minuten bis 4 Stunden durchgeführt wird.

34. Verfahren gemäß mindestens einem der Ansprüche 31 bis 33, bei dem der Bestrahlungsschritt (i) durch $\gamma$-Strahlen, Röntgenstrahlen, UV-Licht, Plasmaeinstrahlung oder $\beta$-Partikel durchgeführt wird.

35. Verfahren gemäß Anspruch 34, bei dem der Bestrahlungsschritt (i) durch $\gamma$-Strahlen durchgeführt wird.

36. Verfahren gemäß mindestens einem der Ansprüche 31 bis 35, bei dem die Gesamtstrahlungsdosis in dem Bestrahlungsschritt (i) im Bereich von 0,01 MGy bis 0,20 MGy liegt.

37. Verfahren gemäß Anspruch 36, bei dem die Gesamtstrahlungsdosis in dem Bestrahlungsschritt (i) im Bereich von 0,02 MGy bis 0,10 MGy liegt.

38. Verfahren gemäß mindestens einem der Ansprüche 31 bis 37, bei dem nach dem Bestrahlungsschritt (i) das aktivierte Polyolefin organisches Hydroperoxy in einer Menge von $3 \times 10^{-3}$ mol/kg bis $70 \times 10^{-3}$ mol/kg enthält.

39. Verfahren gemäß Anspruch 38, bei dem nach dem Bestrahlungsschritt (i) das aktivierte Polyolefin organische Hydroperoxygruppen in einer Menge von $4 \times 10^{-3}$ mol/kg bis $50 \times 10^{-3}$ mol/kg enthält.

40. Verfahren gemäß mindestens einem der Ansprüche 31 bis 39, bei dem das Polyolefin vor dem Bestrahlungsschritt (i) vernetzt oder unvernetzt ist.

41. Verfahren gemäß Anspruch 40, bei dem das Polyolefin unvernetzt ist.

42. Verfahren gemäß mindestens einem der Ansprüche 31 bis 40, bei dem der Pfropfschritt (ii) bei einer Temperatur von 15 bis 150°C durchgeführt wird.

43. Verfahren gemäß Anspruch 42, bei dem der Pfropfschritt (ii) bei einer Temperatur von 45 bis 55°C durchgeführt wird.

44. Verfahren gemäß mindestens einem der Ansprüche 31 bis 43, bei dem der Pfropfschritt (ii) durchgeführt wird in Gegenwart mindestens eines Hydroperoxygruppen-Zersetzungskatalysators.

45. Verfahren gemäß Anspruch 44, bei dem der Hydroperoxygruppen-Zersetzungskatalysator ausgewählt ist aus Eisen (II)sulfat, Eisen(II)ammoniumsulfat, Kobalt(II)chlorid, Chrom(III)chlorid, Kupferchlorid.

46. Verfahren gemäß Anspruch 45, bei dem der Hydroperoxygruppen-Zersetzungskatalysator Eisen(II)sulfat ist.

47. Verfahren gemäß mindestens einem der Ansprüche 44 bis 46, bei dem der Hydroperoxygruppen-Zersetzungskatalysator in einer Menge von 0,5 bis 10 mg/ml hinzugefügt wird.

48. Verfahren gemäß Anspruch 47, bei dem der Hydroperoxygruppen-Zersetzungskatalysator in einer Menge von 1,0 bis 6,0 mg/ml hinzugefügt wird.

49. Verfahren gemäß mindestens einem der Ansprüche 31 bis 48, bei dem in dem Pfropfschritt (ii) die ungesättigten Kohlenwasserstoffmonomere in einem Lösungsmittel aufgelöst werden.

50. Verfahren gemäß Anspruch 49, bei dem das Lösungsmittel ausgewählt ist aus Ketonen, Alkoholen, aromatischen Kohlenwasserstoffen, cyclischen Kohlenwasserstoffen, Ethern, Estern.

51. Verfahren gemäß mindestens einem der Ansprüche 31 bis 50, bei dem Schritt (iii) durchgeführt wird unter Verwendung eines Sulfonierungs- oder eines Phosphorierungsmittels in einer Inertgasatmosphäre oder an Luft.

**52.** Verfahren gemäß Anspruch 51, bei dem das Sulfonierungsmittel aus Chlorsulfonsäure, Fluorsulfonsäure oder Schwefelsäure ausgewählt ist.

**53.** Verfahren gemäß Anspruch 51, bei dem das Phosphorierungsmittel aus Chlorphosphorsäure oder Fluorphosphorsäure ausgewählt ist.

**54.** Verfahren gemäß mindestens einem der Ansprüche 31 bis 51, bei dem Schritt (iii) bei einer Temperatur von 50 bis 150°C durchgeführt wird.

**55.** Verfahren gemäß Anspruch 54, bei dem Schritt (iii) bei einer Temperatur von 70 bis 100°C durchgeführt wird.

**56.** Apparat, der von einer Brennstoffzelle gemäß mindestens einem der Ansprüche 1 bis 18 angetrieben ist.

**57.** Fahrzeug, das von einer Brennstoffzelle gemäß mindestens einem der Ansprüche 1 bis 18 angetrieben ist.

**58.** Tragbare elektronische Vorrichtung, die von einer Brennstoffzelle gemäß mindestens einem der Ansprüche 1 bis 18 angetrieben ist.


**Revendications**

**1.** Pile à combustible, comprenant :

a) une anode,
b) une cathode,
c) et une membrane en polymère servant d'électrolyte, placée entre l'anode et la cathode, qui comprend au moins une polyoléfine comportant des chaînes latérales greffées qui portent des groupes fonctionnels permettant la conduction par protons, lesquelles chaînes latérales sont greffées sur la polyoléfine par l'intermédiaire de ponts à oxygène ;

laquelle pile à combustible présente une résistance de pile :

- qui vaut au plus 0,30 $\Omega.cm^2$ à 90 °C,
- et dont la valeur à 20 °C diffère de sa valeur à 90 °C d'au plus 90 % de cette valeur à 90 °C.

**2.** Pile à combustible conforme à la revendication 1, dont la résistance de pile à 90 °C vaut de 0,02 à 0,25 $\Omega.cm^2$.

**3.** Pile à combustible conforme à la revendication 2, dont la résistance de pile à 90 °C vaut de 0,05 à 0,20 $\Omega.cm^2$.

**4.** Pile à combustible conforme à l'une des revendications 1 à 3, dont la résistance de pile possède à 20 °C une valeur qui diffère de sa valeur à 90 °C d'au plus 70 % de cette valeur à 90 °C.

**5.** Pile à combustible conforme à la revendication 4, dont la résistance de pile possède à 20 °C une valeur qui diffère de sa valeur à 90 °C d'au plus 50 % de cette valeur à 90 °C.

**6.** Pile à combustible conforme à l'une des revendications précédentes, dans laquelle le taux de greffage de chaînes latérales vaut de 10 à 250 %.

**7.** Pile à combustible conforme à la revendication 6, dans laquelle le taux de greffage de chaînes latérales vaut de 40 à 230 %.

**8.** Pile à combustible conforme à l'une des revendications précédentes, qui est une pile à combustible méthanol à combustion directe.

**9.** Pile à combustible conforme à l'une des revendications précédentes, qui est une pile à combustible hydrogène.

**10.** Pile à combustible conforme à l'une des revendications précédentes, pour laquelle la polyoléfine est choisie parmi les suivantes : polyéthylène, polypropylène, poly(chlorure de vinyle), copolymères éthylène-propylène (EPR), terpolymères éthylène-propylène-diène (EPDM), copolymère d'éthylène et d'acétate de vinyle (EVA), copolymère d'éthylène et d'acrylate de butyle (EBA), poly(dichlorure de vinylidène), poly(fluorure de vinyle) (PVF), poly(difluorure de vinylidène) (PVDF), copolymère de fluorure de vinylidène et de tétrafluoroéthylène (PVDF-TFE), copolymère polyvinylidène-hexafluoropropylène, copolymère d'éthylène et de chlorotrifluoroéthylène, copolymère de propylène et de chlorotrifluoroéthylène, polychloroéthylène, copolymère d'éthylène et de tétrafluoroéthylène (ETFE), copolymère de propylène et de tétrafluoroéthylène, copolymère de propylène et d'hexafluoropropylène, et copolymère d'éthylène et d'hexafluoropropylène.

11. Pile à combustible conforme à la revendication 10, dans laquelle la polyoléfine est un polyéthylène.

12. Pile à combustible conforme à la revendication 11, dans laquelle la polyoléfine est un polyéthylène basse densité (PEbd).

13. Pile à combustible conforme à l'une des revendications précédentes, pour laquelle les chaînes latérales sont choisies parmi toutes les chaînes polymères hydrocarbonées qui portent des groupes fonctionnels permettant la conduction par protons ou qui peuvent être modifiées de manière à porter des groupes fonctionnels permettant la conduction par protons.

14. Pile à combustible conforme à la revendication 13, pour laquelle on a obtenu les chaînes latérales par polymérisation-greffage de monomères hydrocarbonés insaturés qui peuvent, en option, être halogénés.

15. Pile à combustible conforme à la revendication 14, pour laquelle le monomère hydrocarboné insaturé est choisi parmi les suivants : styrène, chloroalkyl-styrènes, α-méthyl-styrène, α,β-diméthyl-styrène, α,β,β-triméthyl-styrène, ortho-méthyl-styrène, para-méthyl-styrène, méta-méthyl-styrène, α-fluoro-styrène, trifluorostyrène, para-chlorométhyl-styrène, acide acrylique, acide méthacrylique, acides vinyl-alcanesulfoniques, divinylbenzène, cyanurate de triallyle et vinyl-pyridine, ainsi que leurs copolymères.

16. Pile à combustible conforme à la revendication 15, dans laquelle le monomère hydrocarboné insaturé est du styrène ou de l'α-méthyl-styrène.

17. Pile à combustible conforme à l'une des revendications précédentes, pour laquelle les groupes fonctionnels permettant la conduction par protons sont choisis parmi les groupes de type acide sulfonique et les groupes de type acide phosphorique.

18. Pile à combustible conforme à la revendication 17, pour laquelle les groupes fonctionnels permettant la conduction par protons sont choisis parmi les groupes de type acide sulfonique.

19. Membrane électrolyte en polymère, qui comprend au moins une polyoléfine comportant des chaînes latérales greffées qui portent des groupes fonctionnels permettant la conduction par protons, lesquelles chaînes latérales sont greffées sur la polyoléfine par l'intermédiaire de ponts à oxygène.

20. Membrane électrolyte en polymère, conforme à la revendication 19, dans laquelle le taux de greffage de chaînes latérales (Δp, exprimé en %) vaut de 10 à 250 %.

21. Membrane électrolyte en polymère, conforme à la revendication 20, dans laquelle le taux de greffage de chaînes latérales (Δp, exprimé en %) vaut de 40 à 230 %.

22. Membrane électrolyte en polymère, conforme à l'une des revendications 19 à 21, pour laquelle la polyoléfine est choisie parmi les suivantes : polyéthylène, polypropylène, poly(chlorure de vinyle), copolymères éthylène-propylène (EPR), terpolymères éthylène-propylène-diène (EPDM), copolymère d'éthylène et d'acétate de vinyle (EVA), copolymère d'éthylène et d'acrylate de butyle (EBA), poly(dichlorure de vinylidène), poly(fluorure de vinyle) (PVF), poly(difluorure de vinylidène) (PVDF), copolymère de fluorure de vinylidène et de tétrafluoroéthylène (PVDF-TFE), copolymère polyvinylidène-hexafluoropropylène, copolymère d'éthylène et de chlorotrifluoroéthylène, copolymère de propylène et de chlorotrifluoroéthylène, polychloroéthylène, copolymère d'éthylène et de tétrafluoroéthylène (ETFE), copolymère de propylène et de tétrafluoroéthylène, copolymère de propylène et d'hexafluoropropylène, et copolymère d'éthylène et d'hexafluoropropylène.

23. Membrane électrolyte en polymère, conforme à l'une des revendications 20 à 23, dans laquelle la polyoléfine est un polyéthylène.

**24.** Membrane électrolyte en polymère, conforme à l'une des revendications 20 à 23, dans laquelle la polyoléfine est un polyéthylène basse densité (PEbd).

**25.** Membrane électrolyte en polymère, conforme à l'une des revendications 20 à 24, pour laquelle les chaînes latérales sont choisies parmi toutes les chaînes polymères hydrocarbonées qui portent des groupes fonctionnels permettant la conduction par protons ou qui peuvent être modifiées de manière à porter des groupes fonctionnels permettant la conduction par protons.

**26.** Membrane électrolyte en polymère, conforme à la revendication 25, pour laquelle on a obtenu les chaînes latérales par polymérisation-greffage de monomères hydrocarbonés insaturés qui peuvent, en option, être halogénés.

**27.** Membrane électrolyte en polymère, conforme à la revendication 26, pour laquelle le monomère hydrocarboné insaturé est choisi parmi les suivants : styrène, chloroalkyl-styrènes, $\alpha$-méthyl-styrène, $\alpha,\beta$-diméthyl-styrène, $\alpha,\beta$, $\beta$-triméthyl-styrène, ortho-méthyl-styrène, para-méthyl-styrène, méta-méthyl-styrène, $\alpha$-fluoro-styrène, trifluorostyrène, para-chlorométhyl-styrène, acide acrylique, acide méthacrylique, acides vinyl-alcanesulfoniques, divinylbenzène, cyanurate de triallyle et vinyl-pyridine, ainsi que leurs copolymères.

**28.** Membrane électrolyte en polymère, conforme à la revendication 28, dans laquelle le monomère hydrocarboné insaturé est du styrène ou de l'$\alpha$-méthyl-styrène.

**29.** Membrane électrolyte en polymère, conforme à l'une des revendications 19 à 28, pour laquelle les groupes fonctionnels permettant la conduction par protons sont choisis parmi les groupes de type acide sulfonique et les groupes de type acide phosphorique.

**30.** Membrane électrolyte en polymère, conforme à la revendication 29, pour laquelle les groupes fonctionnels permettant la conduction par protons sont choisis parmi les groupes de type acide sulfonique.

**31.** Procédé de production d'une membrane électrolyte en polymère, qui comporte les étapes suivantes :

i) irradier une polyoléfine en présence d'oxygène, de manière à obtenir une polyoléfine activée ;
ii) greffer des chaînes latérales sur la polyoléfine activée ainsi obtenue, en faisant réagir celle-ci avec au moins un monomère hydrocarboné insaturé, lequel monomère hydrocarboné insaturé peut, en option, porter au moins un groupe fonctionnel permettant la conduction par protons, de manière à obtenir une polyoléfine portant des chaînes latérales greffées ;
iii) et en option, doter ces chaînes latérales greffées de groupes fonctionnels permettant la conduction par protons, si le monomère hydrocarboné insaturé ne contient pas de tels groupes ;

et dans lequel procédé :

- on effectue ladite étape d'irradiation (i) avec une puissance de rayonnement de 0,10 à 100 Gy/s ;
- et l'on fait durer ladite étape de greffage (ii) pendant un laps de temps de 20 minutes à 5 heures.

**32.** Procédé conforme à la revendication 31, dans lequel on effectue ladite étape d'irradiation (i) avec une puissance de rayonnement de 1,0 à 10,0 Gy/s.

**33.** Procédé conforme à la revendication 31 ou 32, dans lequel on fait durer ladite étape de greffage (ii) pendant un laps de temps de 30 minutes à 4 heures.

**34.** Procédé conforme à l'une des revendications 31 à 33, dans lequel on effectue l'étape d'irradiation (i) au moyen de rayons $\gamma$, de rayons X, de lumière UV, de particules P ou d'un plasma.

**35.** Procédé conforme à la revendication 34, dans lequel on effectue l'étape d'irradiation (i) au moyen de rayons $\gamma$.

**36.** Procédé conforme à l'une des revendications 31 à 35, dans lequel la dose totale de rayonnement employée dans l'étape d'irradiation (i) vaut de 0,01 à 0,20 MGy.

37. Procédé conforme à la revendication 36, dans lequel la dose totale de rayonnement employée dans l'étape d'irradiation (i) vaut de 0,02 à 0,10 MGy.

38. Procédé conforme à l'une des revendications 31 à 37, dans lequel, après l'étape d'irradiation (i), la polyoléfine activée contient des groupes hydroperoxy organiques en une quantité de $3.10^{-3}$ à $70.10^{-3}$ mol/kg.

39. Procédé conforme à la revendication 38, dans lequel, après l'étape d'irradiation (i), la polyoléfine activée contient des groupes hydroperoxy organiques en une quantité de $4.10^{-3}$ à $50.10^{-3}$ mol/kg.

40. Procédé conforme à l'une des revendications 31 à 39, dans lequel, avant l'étape d'irradiation (i), la polyoléfine se trouve à l'état réticulé ou non-réticulé.

41. Procédé conforme à la revendication 40, dans lequel la polyoléfine se trouve à l'état non-réticulé.

42. Procédé conforme à l'une des revendications 31 à 40, dans lequel on effectue l'étape de greffage (ii) à une température de 15 à 150 °C.

43. Procédé conforme à la revendication 42, dans lequel on effectue l'étape de greffage (ii) à une température de 45 à 55 °C.

44. Procédé conforme à l'une des revendications 31 à 43, dans lequel on effectue l'étape de greffage (ii) en présence d'au moins un catalyseur de décomposition des groupes hydroperoxy.

45. Procédé conforme à la revendication 44, pour lequel le catalyseur de décomposition des groupes hydroperoxy est choisi parmi du sulfate de fer-II, du sulfate d'ammonium et de fer-II, du chlorure de cobalt-II, du chlorure de chrome-III et du chlorure de cuivre.

46. Procédé conforme à la revendication 45, dans lequel le catalyseur de décomposition des groupes hydroperoxy est du sulfate de fer-II.

47. Procédé conforme à l'une des revendications 44 à 46, pour lequel on ajoute le catalyseur de décomposition des groupes hydroperoxy en une quantité de 0,5 à 10 mg/mL.

48. Procédé conforme à la revendication 47, pour lequel on ajoute le catalyseur de décomposition des groupes hydroperoxy en une quantité de 1,0 à 6,0 mg/mL.

49. Procédé conforme à l'une des revendications 31 à 48, dans lequel, pour l'étape de greffage (ii), le ou les monomères hydrocarbonés insaturés est ou sont dissous dans un solvant.

50. Procédé conforme à la revendication 49, pour lequel le solvant est choisi parmi les cétones, les alcools, les hydrocarbures aromatiques, les hydrocarbures cycliques, les éthers et les esters.

51. Procédé conforme à l'une des revendications 31 à 50, dans lequel on effectue l'étape (iii) à l'aide d'un agent de sulfonation ou de phosphorylation, sous une atmosphère de gaz inerte ou dans l'air.

52. Procédé conforme à la revendication 51, pour lequel l'agent de sulfonation est choisi parmi l'acide chlorosulfonique, l'acide fluorosulfonique et l'acide sulfurique.

53. Procédé conforme à la revendication 51, pour lequel l'agent de phosphorylation est choisi parmi l'acide chlorophosphorique et l'acide fluorophosphorique.

54. Procédé conforme à l'une des revendications 31 à 51, dans lequel on effectue l'étape (iii) à une température de 50 à 150 °C.

55. Procédé conforme à la revendication 54, dans lequel on effectue l'étape (iii) à une température de 70 à 100 °C.

56. Appareillage alimenté en énergie au moyen d'une pile à combustible conforme à l'une des revendications 1 à 18.

**57.** Véhicule alimenté en énergie au moyen d'une pile à combustible conforme à l'une des revendications 1 à 18.

**58.** Dispositif électronique portable alimenté en énergie au moyen d'une pile à combustible conforme à l'une des revendications 1 à 18.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9822989 A
- US 20010026893 A
- US 5994426 A
- WO 0015679 A